# EUROPÄISCHE PATENTSCHRIFT

(11) **EP 3 697 651 B1**
(45) Veröffentlichungstag und Bekanntmachung des Hinweises auf die Patenterteilung: **10.11.2021**
(21) Anmeldenummer: 18779223.9
(22) Anmeldetag: 12.09.2018
(51) Int. Cl.: B60T 7/12, B60T 13/74

(54) **AUTOMATISCHE BREMSVORRICHTUNG FÜR EIN FAHRZEUG UND VERFAHREN ZUM AUTOMATISCHEN ABBREMSEN EINES FAHRZEUGS**
AUTOMATIC BRAKING DEVICE FOR A VEHICLE AND METHOD FOR AUTOMATICALLY BRAKING A VEHICLE
SYSTÈME DE FREINAGE AUTOMATIQUE D'UN VÉHICULE ET PROCÉDÉ PERMETTANT LE FREINAGE AUTOMATIQUE D'UN VÉHICULE

(30) Priorität: 19.10.2017 DE 102017218660
(43) Veröffentlichungstag der Anmeldung: 26.08.2020
(73) Patentinhaber: Robert Bosch GmbH, 70442 Stuttgart (DE)
(72) Erfinder: BLATTERT, Dieter, 74366 Kirchheim/Neckar (DE); FRENZEL, Toni, 74081 Heilbronn (DE); MOELLER, Dennis, 74385 Pleidelsheim (DE)
(86) Internationale Anmeldenummer: PCT/EP2018/074675
(87) Internationale Veröffentlichungsnummer: WO 2019/076547

(56) Entgegenhaltungen:
- DE-A1-102014 209 520
- US-A1- 2009 240 388
- US-A1- 2014 262 633
- US-A1- 2017 066 435

## Beschreibung

Die Erfindung betrifft eine automatische Bremsvorrichtung für ein Fahrzeug und eine Geschwindigkeitssteuerautomatik für ein Fahrzeug. Des Weiteren betrifft die Erfindung ein Verfahren zum automatischen Abbremsen eines Fahrzeugs und ein Verfahren zum automatischen Steuern einer Geschwindigkeit eines Fahrzeugs.

### Stand der Technik

Aus dem Stand der Technik sind Geschwindigkeitssteuerautomatiken für Fahrzeuge bekannt. So beschreibt beispielsweise die DE 10 2014 209 520 A1 ein automatisches Abstandsregelungssystem für ein Fahrzeug, bei welchem mindestens ein Fremdfahrzeug, welches auf der eigenen Fahrspur des Fahrzeugs oder einer anderen Fahrspur als der eigenen Fahrspur fährt, erfasst wird. Schließlich wird automatisch bestimmt, ob durch ein Verzögern des Fahrzeugs mit einer Verzögerung, welche kleiner oder gleich einem vorgegebenen maximalen Verzögerungswert ist, ein vorgegebener Mindestabstand eingehalten werden kann.

### Offenbarung der Erfindung

Die Erfindung schafft eine automatische Bremsvorrichtung für ein Fahrzeug mit den Merkmalen des Anspruchs 1, eine Geschwindigkeitssteuerautomatik für ein Fahrzeug mit den Merkmalen des Anspruchs 5, ein Verfahren zum automatischen Abbremsen eines Fahrzeugs mit den Merkmalen des Anspruchs 6 und ein Verfahren zum automatischen Steuern einer Geschwindigkeit eines Fahrzeugs mit den Merkmalen des Anspruchs 10.

### Vorteile der Erfindung

Die vorliegende Erfindung schafft Möglichkeiten zur Reduzierung oder Verhinderung einer Feinstaubemission während einer Fahrt eines Fahrzeugs durch ein Gebiet, für welches eine feinstauboptimierte Fahrweise gewünscht ist. Damit kann gezielt in solchen Gebieten, in welchen hohe Feinstaubwerte für eine Vielzahl von Personen schädlich wäre, eine Feinstaubfreisetzung verhindert/reduziert werden. Die vorliegende Erfindung trägt somit wesentlich zur Reduzierung/Behebung einer Feinstaubbelastung bei.

Die vorliegende Erfindung kann bei allen Erzeugnissen eingesetzt werden, welche eine assistierte oder automatisierte Bremsfunktion, bzw. eine assistierte oder automatisierte Fahrfunktion, durch zumindest zeitweise ausgeführtes automatisches Reduzieren einer Fahrzeuggeschwindigkeit, besitzen. Für alle diese Erzeugnisse bewirkt die vorliegende Erfindung eine umgebungsbedingte und/oder situationsbedingte Fahrweise des eingesetzten Fahrzeugs, mittels welcher eine Feinstaubfreisetzung gezielt in solchen Gebieten, in welchen eine feinstauboptimierte Fahrweise gewünscht ist, reduziert oder verhindert ist. Es wird außerdem darauf hingewiesen, dass die vorliegende Erfindung selbst auf hochautomatisierte Fahrmanöver angewendet werden kann, um die vorausgehend beschriebenen Vorteile zu gewährleisten.

In einer bevorzugten Ausführungsform der automatischen Bremsvorrichtung ist die Elektronikeinrichtung zusätzlich dazu ausgelegt, unter Berücksichtigung mindestens eines Sensorsignals mindestens eines Umgebungserfassungs-Sensors und/oder mindestens eines Fahrzeugzustanderfassungs-Sensors festzulegen, ob eine Notbremssituation vorliegt, und, gegebenenfalls, selbst wenn das Fahrzeug gerade durch ein der Elektronikeinrichtung vorgegebenes Feinstaub-Schutzgebiet fährt, die mindestens eine Bremssystemkomponente so anzusteuern, dass die mittels der mindestens einen Reibbremse auf das mindestens eine zugeordnete Rad bewirkte Bremskraft um den Höchst-Bremskraftaufbaugradienten und/oder auf die Höchst-Bremskraft gesteigert ist. Somit kann trotz der unter Normalbedingungen bewirkten feinstauboptimierten Fahrweise des Fahrzeugs das Fahrzeug in Notbremssituationen schnell in den Stillstand gebracht werden. Damit weist das mit der automatischen Bremsvorrichtung ausgestattete Fahrzeug weiterhin einen hohen Sicherheitsstandard auf.

In einer weiteren vorteilhaften Ausführungsform der automatischen Bremsvorrichtung ist die Elektronikeinrichtung zusätzlich dazu ausgelegt, den Grenz-Bremskraftaufbaugradienten und/oder die Grenz-Bremskraft unter Berücksichtigung mindestens einer Temperatur mindestens einer zum Bewirken des automatischen Abbremsens des Fahrzeugs eingesetzten Reibkomponente festzulegen. Beispielsweise können der Grenz-Bremskraftaufbaugradienten und/oder die Grenz-Bremskraft unter Berücksichtigung einer aktuellen Bremsscheibentemperatur und/oder einer aktuellen Bremsbelagtemperatur festzulegen. Die hier beschriebene Ausführungsform der automatischen Bremsvorrichtung berücksichtigt damit, dass eine Freisetzung von Feinstaub während einer mittels mindestens einer Reibbremse bewirkten Bremsung nicht nur von dem Bremskraftaufbaugradienten und der Bremskraft, sondern auch von der aktuellen Bremsscheibentemperatur und der aktuellen Bremsbelagtemperatur abhängt. Deshalb kann mittels der hier beschriebenen Ausführungsform der automatisierten Bremsvorrichtung ein automatisches Abbremsen des Fahrzeugs so ausgeführt werden, dass trotz einer reduzierten/verhinderten Feinstaubfreisetzung das Fahrzeug möglichst schnell verlangsamt oder in den Stillstand gebracht wird. Damit bleibt weiterhin ein guter Brems- und Fahrkomfort für einen Fahrer des mit der automatisierten Bremsvorrichtung ausgestatteten Fahrzeugs gewährleistet.

Außerdem kann, sofern das Fahrzeug gerade durch ein der Elektronikeinrichtung vorgegebenes Feinstaub-Schutzgebiet fährt und zumindest keine Notbremssituation vorliegt, die Elektronikeinrichtung zusätzlich dazu ausgelegt sein, zu ermitteln, welche maximale Generator-Bremskraft mittels eines Generators des Fahrzeugs bewirkbar ist. In diesem Fall ist die Elektronikeinrichtung vorzugsweise dazu ausgelegt, zumindest sofern das Fahrzeug innerhalb eines vorgegebenen oder festgelegten Höchst-Zeitintervalls mittels der maximalen Generator-Bremskraft abbremsbar ist, eine Generatorsteuereinrichtung als die mindestens eine Bremssystemkomponente derart anzusteuern, dass das Fahrzeug mittels des Generators abgebremst ist. Die hier beschriebene Ausführungsform der automatischen Bremsvorrichtung berücksichtigt damit, dass ein Abbremsen des Fahrzeugs mittels des Generators in der Regel weniger feinstaubkritisch ist als ein Abbremsen des Fahrzeugs mittels der mindestens einen Reibbremse. Durch die bevorzugte Nutzung des Generators zum Abbremsen des Fahrzeugs kann deshalb eine Feinstaubfreisetzung zusätzlich reduziert/verhindert werden.

Die vorausgehenden beschriebenen Vorteile werden auch durch eine Geschwindigkeitssteuerautomatik für ein Fahrzeug mit einer entsprechenden automatischen Bremsvorrichtung bewirkt. Es wird ausdrücklich darauf hingewiesen, dass die Geschwindigkeitssteuerautomatik mit allen Merkmalen der vorausgehend beschriebenen Ausführungsformen der automatisierten Bremsvorrichtung ausgebildet sein kann.

Ebenso sind auch bei einem Ausführen eines korrespondierenden Verfahrens zum automatischen Abbremsen eines Fahrzeugs die oben beschriebenen Vorteile gewährleistet. Auch das Verfahren zum automatischen Abbremsen eines Fahrzeugs kann gemäß den oben beschriebenen Ausführungsformen der automatischen Bremsvorrichtung weitergebildet werden.

Des Weiteren schafft auch ein korrespondierendes Verfahren zum automatischen Steuern einer Geschwindigkeit eines Fahrzeugs die oben beschriebenen Merkmale. Das Verfahren zum automatischen Steuern einer Geschwindigkeit eines Fahrzeugs kann ebenso gemäß den oben beschriebenen Ausführungsformen der automatischen Bremsvorrichtung weitergebildet werden.

### Kurze Beschreibung der Zeichnungen

Weitere Merkmale und Vorteile der vorliegenden Erfindung werden nachfolgend anhand der Figuren erläutert. Es zeigen:
- Fig. 1: ein Flussdiagramm einer Ausführungsform des Verfahrens zum automatischen Abbremsen eines Fahrzeugs; und
- Fig. 2: eine schematische Darstellung einer Ausführungsform der automatischen Bremsvorrichtung.

### Ausführungsformen der Erfindung

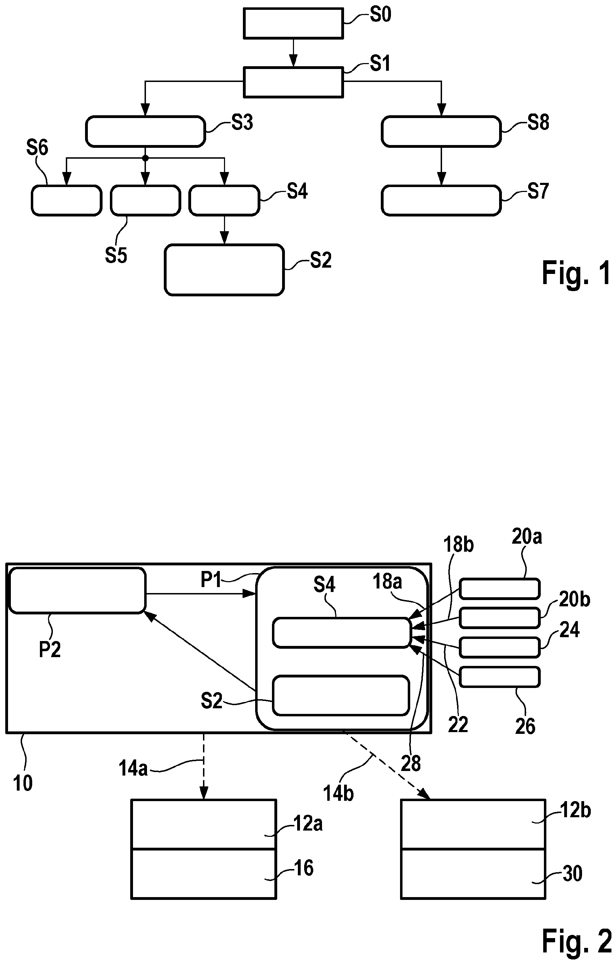

Fig. 1 zeigt ein Flussdiagramm einer Ausführungsform des Verfahrens zum automatischen Abbremsen eines Fahrzeugs.

Eine Ausführbarkeit ist im Weiteren beschriebenen Verfahrens zum automatischen Abbremsen eines Fahrzeugs/Kraftfahrzeugs ist auf keinen bestimmten Fahrzeugtyp/Kraftfahrzeugtyp beschränkt. Unter dem automatischen Abbremsen des Fahrzeugs kann sowohl ein automatisches Verlangsamen des Fahrzeugs (auf eine Restgeschwindigkeit ungleich Null) als auch ein automatisches Anhalten des Fahrzeugs (bis zu dessen Stillstand) verstanden werden. Das jeweilige Abbremsen des Fahrzeugs erfolgt automatisch, d.h. ohne eine Bremsanforderung eines Fahrers des Fahrzeugs. Man kann eine derartige automatische Abbremsung des Fahrzeugs deshalb auch als eine fremdinduzierte Bremsung, eine "fahrerlose" Bremsung, eine Fahrerbremswunsch-lose Bremsung oder eine Fremdkraftbremsung umschreiben. Das automatische Abbremsen des Fahrzeugs erfolgt in der Regel als Reaktion auf mindestens ein Sensorsignal mindestens eines Umgebungserfassungs-Sensors und/oder mindestens eines Fahrzeugzustanderfassungs-Sensors. Beispielsweise wird anhand des mindestens einen Sensorsignals erkannt, dass ein Verlangsamen oder Anhalten des Fahrzeugs vorteilhaft/notwendig ist, um einen Sicherheitsabstand zu mindestens einer erkannten Person und/oder mindestens einem festgestellten Objekt (wie z.B. mindestens einem Fremdfahrzeug) einzuhalten und/oder ein Unfallrisiko zu reduzieren. Es wird ausdrücklich darauf hingewiesen, dass eine Ausführbarkeit des hier beschriebenen Verfahrens weder auf einen bestimmten Sensortyp des mindestens einen Umgebungserfassungs-Sensors und/oder des mindestens einen Fahrzeugzustanderfassungs-Sensors limitiert noch auf ein spezielles Auswerteprogramm zum Auswerten des mindestens einen Sensorsignals eingeschränkt ist.

Das automatische Abbremsen des Fahrzeugs erfolgt mittels mindestens einer Reibbremse des Fahrzeugs derart, dass das Fahrzeug mittels einer von der mindestens einen Reibbremse auf mindestens ein zugeordnetes Rad des Fahrzeugs bewirkten Bremskraft abgebremst wird. Dabei sind ein Höchst-Bremskraftaufbaugradient und/oder eine Höchst-Bremskraft technikbedingt oder programmiert so vorgegeben, dass zumindest manchmal die mittels der mindestens einen Reibbremse auf das mindestens eine zugeordnete Rad bewirkte Bremskraft mit dem vorgegebenen Höchst-Bremskraftaufbaugradienten und/oder bis zu der vorgegebenen Höchst-Bremskraft gesteigert wird. (Normalerweise kann die bewirkte Bremskraft technikbedingt oder programmiert nicht um einen Bremskraftaufbaugradienten über dem vorgegebenen Höchst-Bremskraftaufbaugradient oder über die vorgegebene Höchst-Bremskraft gesteigert werden.)

Das Verfahren weist einen Verfahrensschritt S1 auf, in welchem ermittelt wird, ob das Fahrzeug gerade durch ein vorgegebenes oder selbst-festgelegtes Feinstaub-Schutzgebiet fährt. Unter dem Feinstaub-Schutzgebiet muss nicht ein gesetzlich festgelegtes Feinstaub-Schutzgebiet verstanden werden. Stattdessen kann vor einem Ausführen des hier beschriebenen Verfahrens eine selbstgewählte Anzahl von Gebieten, für welche eine niedrige Feinstaubfreisetzung gewünscht wird, als Feinstaub-Schutzgebiet festgelegt werden. Ein Feinstaub-Schutzgebiet kann beispielsweise eine Umweltzone, ein städtisches Gebiet und/oder ein Ortskern sein. Als Nicht-Feinstaub-Schutzgebiet kann z.B. ein ländliches Gebiet und/oder eine Schnellstraße (wie z.B. eine Autobahn) vorgegeben werden. Ebenso kann mindestens ein Merkmal/Kriterium ausgewählt/festgelegt werden, welches ein Feinstaub-Schutzgebiet von einem Nicht-Feinstaub-Schutzgebiet abgrenzt. Insbesondere eine erlaubte Höchst-Geschwindigkeit kann zum Unterscheiden zwischen einem Feinstaub-Schutzgebiet und einem Nicht-Feinstaub-Schutzgebiet ausgewertet werden. Liegt die erlaubte Höchst-Geschwindigkeit in einem Gebiet unter einer vorgegebenen oder selbst-festgelegten Grenz-Geschwindigkeit, so kann mit hoher Wahrscheinlichkeit davon ausgegangen werden, dass in diesem Gebiet eine niedrige Feinstaubfreisetzung gewünscht wird, während eine erlaubte Höchst-Geschwindigkeit über der vorgegebenen oder selbst-festgelegten Grenz-Geschwindigkeit auf ein Durchfahren eines Nicht-Feinstaub-Schutzgebiets deutet. Somit kann beispielsweise mittels einer Verkehrsschilderkennung verlässlich zwischen einem Feinstaub-Schutzgebiet und einem Nicht-Feinstaub-Schutzgebiet unterschieden werden. Es wird ausdrücklich darauf hingewiesen, dass der Verfahrensschritt S1 automatisiert und selbständig, d.h. ohne eine Zuhilfenahme des Fahrers, ausgeführt werden kann.

Optionalerweise kann vor dem automatischen Abbremsen noch ein Verfahrensschritt S0 ausgeführt werden. Der Verfahrensschritt S0 kann vor, nach oder zeitlich überlappend mit dem Verfahrensschritt S1 ausgeführt werden. In dem Verfahrensschritt S0 wird unter Berücksichtigung des mindestens einen Sensorsignals des mindestens einen Umgebungserfassungs-Sensors und/oder des mindestens einen Fahrzeugzustanderfassungs-Sensors festgelegt, ob eine Notbremssituation vorliegt. Auf die Reaktion des Verfahrens auf das Vorliegen einer Notbremssituation wird unten noch eingegangen.

Zumindest wenn keine Notbremssituation vorliegt und sofern ermittelt wird, dass das Fahrzeug gerade durch ein Feinstaub-Schutzgebiet fährt, wird ein Verfahrensschritt S2 zum automatischen Abbremsen des Fahrzeugs ausgeführt. Dazu wird während des Verfahrensschritts S2 (d.h. während des automatischen Abbremsens) die mittels der mindestens einen Reibbremse auf das mindestens eine zugeordnete Rad bewirkte Bremskraft höchstens mit einem vorgegebenen oder festgelegten Grenz-Bremskraftaufbaugradienten kleiner als der Höchst-Bremskraftaufbaugradient und/oder höchstens bis zu einer vorgegebenen oder festgelegten Grenz-Bremskraft kleiner als die Höchst-Bremskraft gesteigert. Beispielsweise wird während des Verfahrensschritts S2 (d.h. während des automatischen Abbremsens) mindestens eine Bremssystemkomponente eines Bremssystems des Fahrzeugs so angesteuert/betrieben, dass ein bewirkter Bremskraftaufbaugradient, um welchen die Bremskraft während des automatischen Abbremsens gesteigert wird, den vorgegebenen oder festgelegten Grenz-Bremskraftaufbaugradienten nicht übersteigt, und/oder die während des automatischen Abbremsens bewirkte Bremskraft höchstens gleich der vorgegebenen oder festgelegten Grenz-Bremskraft wird.

Das hier beschriebene Verfahren berücksichtigt somit, dass Feinstaubemissionen herkömmlicher Weise häufig auf Abrieb von Reibkomponenten während starker und/oder schneller Bremsungen zurückzuführen sind. Mittels einer Limitierung des während des Verfahrensschritts S2 ausgeführten Kraftaufbaugradienten auf höchstens den Grenz-Druckaufbaugradient und/oder einer Limitierung der während des Verfahrensschritts S2 bewirkten Bremskraft auf höchstens die Grenz-Bremskraft kann (aufgrund eines limitierten Anpressdrucks eines Reibmaterials zu seiner Reiboberfläche) eine Feinstaubfreisetzungen verhindert/verringert werden. Eine derartige Verhinderung von Abrieb ist in Feinstaub-Schutzgebieten, wie z.B. Umweltzonen, städtischen Gebieten und Ortskernen, besonders wünschenswert. Das hier beschriebene Verfahren trägt damit wesentlich zur Verbesserungen von Lebens- und Umweltbedingungen bei.

Unter der mindestens einen Reibbremse können mindestens eine hydraulische Reibbremse und/oder mindestens eine elektro-mechanische Reibbremse verstanden werden. Im Fall einer Verwendung von hydraulischen Reibbremsen entspricht die mittels der mindestens einen hydraulischen Reibbremse auf das mindestens eine zugeordnete Rad bewirkte Bremskraft einem in der mindestens einen hydraulischen Reibbremse vorliegenden/aufgebauten Bremsdruck. Entsprechend entspricht ein Bremskraftaufbaugradient, um welchen die mittels der mindestens einen hydraulischen Reibbremse bewirkte Bremskraft gesteigert wird, einem Druckaufbaugradienten, um welchen der in der mindestens einen hydraulischen Reibbremse vorliegende/aufgebaute Bremsdruck verstärkt wird. Damit entsprechen der Höchst-Bremskraftaufbaugradient, der Grenz-Bremskraftaufbaugradient, die Höchst-Bremskraft und die Grenz-Bremskraft einem Höchst-Druckaufbaugradienten, einem Grenz-Druckaufbaugradienten, einem Höchst-Bremsdruck und einem Grenz-Bremsdruck. Wird der Verfahrensschritt S2 unter Verwendung von hydraulischen Reibbremsen ausgeführt, so wird der in der mindestens einen hydraulischen Reibbremse vorliegende/aufgebaute Bremsdruck höchstens um einen vorgegebenen oder festgelegten Grenz-Druckaufbaugradienten kleiner als der Höchst-Druckaufbaugradient und/oder höchstens bis zu einem vorgegebenen oder festgelegten Grenz-Bremsdruck kleiner als der Höchst-Bremsdruck gesteigert.

Bei der hier beschriebenen Ausführungsform wird vor dem Verfahrensschritt S2 ein optionaler Verfahrensschritt S3 ausgeführt, in welchem eine Elektronikeinrichtung zum Ansteuern der mindestens einen Bremssystemkomponente des Bremssystems des Fahrzeugs auf "feinstauboptimierte Brems- oder Fahrstrategie" geschaltet wird. Optionaler Weise kann vor dem Verfahrensschritt S2 auch (evtl. ohne den Verfahrensschritt S3) ein Verfahrensschritt S4 ausgeführt werden, in welchem der Grenz-Bremskraftaufbaugradient und/oder die Grenz-Bremskraft unter Berücksichtigung mindestens einer (ermittelten/aktuellen) Temperatur mindestens einer zum Bewirken des automatischen Abbremsens des Fahrzeugs eingesetzten Reibkomponente festgelegt werden. Z.B. können der Grenz-Bremskraftaufbaugradient und/oder die Grenz-Bremskraft unter Berücksichtigung einer (ermittelten/aktuellen) Bremsscheibentemperatur und/oder einer (ermittelten/aktuellen) Bremsbelagtemperatur festgelegt werden. Alternativ oder ergänzend kann auch mindestens eine (ermittelte/aktuelle) Temperatur mindestens einer (weiterer) zum Bewirken des automatischen Abbremsens des Fahrzeugs eingesetzten Reibkomponente bei der Festlegung des Grenz-Bremskraftaufbaugradienten und/oder der Grenz-Bremskraft (mit-)berücksichtigt werden. (Entsprechend können in dem Verfahrensschritt S4 auch der Grenz-Druckaufbaugradient und/oder der Grenz-Bremsdruck unter Berücksichtigung der mindestens einen (ermittelten/aktuellen) Temperatur der mindestens einen eingesetzten Reibkomponente, wie z.B. der (ermittelten/aktuellen) Bremsscheibentemperatur und/oder der (ermittelten/aktuellen) Bremsbelagtemperatur, festgelegt werden.)

Das hier beschriebene Verfahren kann auch so erweitert werden, dass es für Elektro- und Hybridfahrzeuge optimiert ist. Ein Elektro- oder Hybridfahrzeug weist in der Regel einen Generator (bzw. einen generatorisch einsetzbaren Elektromotor), wie beispielsweise seinen elektrischen Antriebsmotor, auf. Der Generator ist meistens weniger feinstaubkritisch als die mindestens eine Reibbremse des Fahrzeugs. Dies kann zur Reduzierung/Vermeidung von unerwünschten Feinstauberzeugungen genutzt werden. Dazu wird (z.B. in dem Verfahrensschritt S3 ermittelt), welche maximale Generator-Bremskraft mittels des Generators des Fahrzeugs bewirkbar ist. Zumindest sofern das automatische Abbremsen des Fahrzeugs innerhalb eines vorgegebenen oder festgelegten Höchst-Zeitintervalls (ausschließlich) mittels der maximalen Generator-Bremskraft bewirkbar ist, wird dann ein Verfahrensschritt S5 ausgeführt, in welchem das Fahrzeug (ausschließlich) mittels des Generators abgebremst wird. Ist die maximale Generator-Bremskraft zum bewirken des automatische Abbremsen des Fahrzeugs innerhalb des Höchst-Zeitintervalls nicht ausreichend, so können die Verfahrensschritte S2 und S5 auch gemeinsam/gleichzeitig ausgeführt werden, um das Fahrzeug mittels des Generators und mittels der mindestens einen Reibbremse abzubremsen. In diesem Fall ist es vorteilhaft, wenn die zur Verfügung stehende maximale Generator-Bremskraft vollständig zum automatischen Abbremsen des Fahrzeugs genutzt wird, und die mindestens eine Reibbremse lediglich zum Ersetzen einer zum (vollständigen) Bewirken des automatische Abbremsens des Fahrzeugs innerhalb des Höchst-Zeitintervalls "fehlenden Bremswirkung" des Generators eingesetzt wird, wobei die mittels der mindestens einen Reibbremse auf das mindestens eine zugeordnete Rad bewirkte Bremskraft höchstens um den Grenz-Bremskraftaufbaugradient und/oder höchstens bis zu der Grenz-Bremskraft gesteigert wird. Man kann dies auch damit umschreiben, dass in einem Feinstaub-Schutzgebiet der Generator in einem Master-Modus betrieben wird, während die mindestens eine Reibbremse im Slave-Modus vorliegt.

Das hier beschriebene Verfahren kann auch zu einem Verfahren zum automatischen Steuern einer Geschwindigkeit eines Fahrzeugs erweitert werden. In diesem Fall kann während einer Fahrt des Fahrzeugs durch ein Feinstaub-Schutzgebiet mittels eines (optionalen) Verfahrensschritts S6 auch eine vorausschauende Fahrstrategie so ausgeführt werden, dass starke/feinstauberzeugende Bremsungen des Fahrzeugs während seiner Fahrt durch das Feinstaub-Schutzgebiet vermieden werden. Beispielsweise kann eine (spätere) Beschleunigung des zuvor automatisch abgebremsten Fahrzeugs während seiner Fahrt durch das Feinstaub-Schutzgebiet auf eine Grenz-Beschleunigung und/oder bis zu einer Grenz-Geschwindigkeit limitiert werden. Auf diese Weise ist sicherstellbar, dass starke/feinstauberzeugende Bremsungen des Fahrzeugs während seiner Fahrt durch das Feinstaub-Schutzgebiet kaum auftreten. Damit kann schon vorausschauend eine (spätere) Feinstauberzeugung verhindert werden.

Wird in dem Verfahrensschritt S1 festgestellt, dass eine aktuelle Fahrt des Fahrzeugs nicht durch ein Feinstaub-Schutzgebiet führt, z.B. weil das Fahrzeug gerade durch ein Nicht-Feinstaub-Schutzgebiet fährt, so wird ein Verfahrensschritt S7 zum automatischen Abbremsen des Fahrzeugs ausgeführt. Während des Verfahrensschritts S7 (d.h. während des automatischen Abbremsens) wird beim Steigern der mittels der mindestens einen Reibbremse auf das mindestens eine zugeordnete Rad bewirkten Bremskraft keine Limitierung des Bremskraftaufbaugradienten (unter dem Höchst-Bremskraftaufbaugradient) und keine Limitierung der maximal bewirkten Bremskraft (unter der Höchst-Bremskraft) eingehalten. Stattdessen kann die auf das mindestens eine zugeordnete Rad bewirkte Bremskraft selbst um den Höchst-Bremskraftaufbaugradienten und/oder bis auf die Höchst-Bremskraft gesteigert werden. Vorzugsweise wird in dem Verfahrensschritt S7 das automatische Abbremsen des Fahrzeugs mittels einer kurzen und/oder starken Bremsung bewirkt.

Auch bei einer in dem Verfahrensschritt S0 festgelegten Notbremssituation kann, selbst wenn das Fahrzeug gerade durch ein Feinstaub-Schutzgebiet fährt, der Verfahrensschritt S7 zum automatischen Abbremsen des Fahrzeugs ausgeführt werden. Vorzugsweise wird dann die mittels der mindestens einen Reibbremse auf das mindestens eine zugeordnete Rad bewirkte Bremskraft um den Höchst-Bremskraftaufbaugradienten und/oder auf die Höchst-Bremskraft gesteigert. Im Falle einer Notbremssituation ist die Feinstauboptimierung damit untergeordnet und das Fahrzeug kann innerhalb kurzer Zeit abgebremst/in den Stillstand gebracht werden. Das hier beschriebene Verfahren bewirkt somit einen hohen Sicherheitsstandard des damit abgebremsten Fahrzeugs.

Vor dem Verfahrensschritt S7 kann ein (optionaler) Verfahrensschritt S8 ausgeführt werden, in welchem die Elektronikeinrichtung zum Ansteuern der mindestens einen Bremssystemkomponente des Bremssystems des Fahrzeugs auf "sportliche Brems- oder Fahrstrategie" geschaltet wird. Unter der "sportlichen Brems- oder Fahrstrategie" kann beispielsweise auch eine verbrauchsoptimierte Fahrstrategie und/oder eine CO2-Emission-arme Fahrstrategie verstanden werden.

Das oben beschriebene Verfahren ermöglicht eine situationsabhängige Bremsstrategie (und evtl. Fahrstrategie), um die mindestens eine Reibbremse in unterschiedlichen Umgebungen wahlweise Feinstaub-emissionsreduziert oder zum Bewirken einer sportlichen Fahrweise einzusetzen. Je nach erkannter Umgebung wird automatisch eine umgebungsoptimierte Bremsstrategie (evtl. Fahrstrategie) gewählt. Dabei wird berücksichtigt, dass längere, aber weniger intensive Bremsungen feinstauboptimiert sind, während kurze aber intensive Bremsungen für eine sportliche Fahrweise bevorzugt werden.

Fig. 2 zeigt eine schematische Darstellung einer Ausführungsform der automatischen Bremsvorrichtung.

Die mittels der Fig. 2 schematisch wiedergegebene automatische Bremsvorrichtung kann auch als eine Bremsautomatik oder als ein Bremsassistent bezeichnet werden. Mittels der automatischen Bremsvorrichtung kann ein Fahrzeug ohne eine Bremsanforderung seines Fahrers sowohl verlangsamt als auch in den Stillstand gebracht werden. Unter dem Fahrzeug kann insbesondere ein Kraftfahrzeug verstanden werden, wobei eine Einsetzbarkeit der automatischen Bremsvorrichtung auf keinen Fahrzeugtyp/Kraftfahrzeugtyp beschränkt ist. Die automatische Bremsvorrichtung kann auch Teil einer Geschwindigkeitssteuerautomatik, bzw. als Geschwindigkeitssteuerautomatik ausgebildet sein. Unter der Geschwindigkeitssteuerautomatik kann insbesondere ein Fahrerassistenzsystem, wie beispielsweise ein ACC-System (Automated Cruise Control System) verstanden werden.

Die automatische Bremsvorrichtung hat eine Elektronikeinrichtung 10, welche dazu ausgelegt ist, mindestens eine Bremssystemkomponente 12a und 12b eines Bremssystems des Fahrzeugs mittels mindestens eines Steuersignals 14a und 14b derart anzusteuern, dass das Fahrzeug mittels einer von mindestens einer Reibbremse 16 des Fahrzeugs auf mindestens ein (nicht dargestelltes) zugeordnetes Rad des Fahrzeugs bewirkten Bremskraft abbremsbar ist. Dabei ist zumindest manchmal die mittels der mindestens einen Reibbremse 16 auf das mindestens eine zugeordnete Rad bewirkte Bremskraft um einen vorgegebenen Höchst-Bremskraftaufbaugradienten und/oder auf eine vorgegebene Höchst-Bremskraft gesteigert. Der Höchst-Bremskraftaufbaugradient und die Höchst-Bremskraft können technisch oder programmiert vorgegeben sein. Beispielsweise ist die Elektronikeinrichtung 10 dazu ausgelegt, anhand mindestens eines Sensorsignals 18a und 18b mindestens eines Umgebungserfassungs-Sensors 20a und/oder mindestens eines Fahrzeugzustanderfassungs-Sensors 20b automatisch/selbstständig zu erkennen, ob ein automatisches Abbremsen des Fahrzeugs vorteilhaft ist. Auch ein Vorliegen einer Notbremssituation kann mittels der Elektronikeinrichtung 10 unter Berücksichtigung des mindestens einen Sensorsignals 18a und 18b festlegbar/erkennbar sein.

Zumindest wenn keine Notbremssituation vorliegt, ist die Elektronikeinrichtung 10 vor einem Ausgeben des mindestens einen Steuersignals 14a und 14b dazu ausgelegt, zu ermitteln, ob das Fahrzeug gerade durch ein der Elektronikeinrichtung 10 vorgegebenes Feinstaub-Schutzgebiet fährt. Das Erkennen einer aktuellen Fahrt des Fahrzeugs durch ein Feinstaub-Schutzgebiet kann beispielsweise mittels einer Auswertung des mindestens einen Sensorsignals 18a des mindestens einen Umgebungserfassungs-Sensors 20a erfolgen. Gegebenenfalls, d.h. wenn das Fahrzeug gerade durch ein Feinstaub-Schutzgebiet fährt, ist die Elektronikeinrichtung 10 dazu ausgelegt, die mindestens eine Bremssystemkomponente 12a und 12b so anzusteuern, dass die mittels der mindestens einen Reibbremse 16 auf das mindestens eine zugeordnete Rad bewirkte Bremskraft höchstens mit einem vorgegebenen oder festgelegten Grenz-Bremskraftaufbaugradienten kleiner als der Höchst-Bremskraftaufbaugradient und/oder höchstens auf eine vorgegebene oder festgelegte Grenz-Bremskraft kleiner als die Höchst-Bremskraft gesteigert ist/wird. Damit realisiert auch die automatische Bremsvorrichtung eine "feinstauboptimierte Brems- oder Fahrstrategie" während der Fahrt des Fahrzeugs durch das Feinstaub-Schutzgebiet, beispielsweise durch Schalten der Elektronikeinrichtung 10 auf eine "feinstaub-optimierte Ansteuerstrategie" P1.

Als Weiterbildung kann die Elektronikeinrichtung 10 zusätzlich dazu ausgelegt sein, den Grenz-Bremskraftaufbaugradienten und/oder die Grenz-Bremskraft unter Berücksichtigung mindestens einer (ermittelten/aktuellen) Temperatur mindestens einer zum Bewirken des automatischen Abbremsens des Fahrzeugs eingesetzten Reibkomponente, wie z.B. einer aktuellen Bremsscheibentemperatur und/oder einer aktuellen Bremsbelagtemperatur, festzulegen. (Die Elektronikeinrichtung 10 kann somit zumindest zum Ausführen der oben beschriebenen Verfahrensschritte S2 und S4 ausgebildet sein.) Die mindestens eine (ermittelte/aktuelle) Temperatur kann mittels mindestens eines Temperatursignals 22 mindestens eines Temperatursensors 24 an die Elektronikeinrichtung 10 bereitgestellt sein. Auch eine (aktuelle) Fahrzeuggeschwindigkeit kann mittels eines Geschwindigkeitssensors 26 gemessen und als Geschwindigkeitssignal 28 an die Elektronikeinrichtung 10 bereitgestellt sein.

Als weitere optionale Weiterbildung kann die Elektronikeinrichtung 10 auch, sofern das Fahrzeug gerade durch ein ihr vorgegebenes Feinstaub-Schutzgebiet fährt und zumindest wenn keine Notbremssituation vorliegt, zusätzlich dazu ausgelegt sein, zu ermitteln, welche maximale Generator-Bremskraft mittels eines Generators 30 des Fahrzeugs bewirkbar ist, und, zumindest sofern das Fahrzeug (ausschließlich) mittels der maximalen Generator-Bremskraft innerhalb eines vorgegebenen oder festgelegten Höchst-Zeitintervalls abbremsbar ist, kann die Elektronikeinrichtung 10 zusätzlich dazu ausgelegt sein, eine Generatorsteuereinrichtung 12b (als die mindestens eine Bremssystemkomponente 12a und 12b) derart anzusteuern, dass das Fahrzeug mittels des Generators 30 abgebremst ist/wird. Mittels eines bevorzugten Einsetzens des Generators 30 zum automatischen Abbremsen des Fahrzeugs kann zusätzlich sichergestellt werden, dass so wenig Feinstaub wie möglich durch die mindestens eine Reibbremse 16 emittiert wird.

Erkennt die Elektronikeinrichtung 10 jedoch, dass das Fahrzeug gerade durch kein Feinstaub-Schutzgebiet fährt, ist die Elektronikeinrichtung 10 dazu ausgelegt, beim Ansteuern der mindestens einen Bremssystemkomponente 12a und 12b keine Limitierung des Bremskraftaufbaugradienten (unter dem Höchst-Bremskraftaufbaugradient) und keine Limitierung der maximal bewirkten Bremskraft (unter der Höchst-Bremskraft) einzuhalten. Auch wenn die Elektronikeinrichtung 10 festlegt, dass eine Notbremssituation vorliegt, kann die Elektronikeinrichtung 10 dazu ausgelegt sein, selbst wenn das Fahrzeug gerade durch ein der Elektronikeinrichtung 10 vorgegebenes Feinstaub-Schutzgebiet fährt, die mindestens eine Bremssystemkomponente 12a und 12b ohne Limitierung des Bremskraftaufbaugradienten (unter dem Höchst-Bremskraftaufbaugradient) und ohne Limitierung der maximal bewirkten Bremskraft (unter der Höchst-Bremskraft) anzusteuern. Beispielsweise steuert die Elektronikeinrichtung 10 die mindestens eine Bremssystemkomponente 12a und 12b nach Festlegen einer vorliegenden Notbremssituation derart an, dass die mittels der mindestens einen Reibbremse 16 auf das mindestens eine zugeordnete Rad bewirkte Bremskraft um den Höchst-Bremskraftaufbaugradienten und/oder auf die Höchst-Bremskraft gesteigert ist/wird. Zum Bewirken einer "sportlichen Brems- oder Fahrstrategie" in einem Nicht-Feinstaub-Schutzgebiet und/oder bei Vorliegen einer Notbremssituation kann der Elektronikeinrichtung 10 auf eine "normale Ansteuerstrategie" P2 geschaltet werden.

Unter der mindestens einen Reibbremse 16 können mindestens eine hydraulische Reibbremse 16 und/oder mindestens eine elektro-mechanische Reibbremse 16 verstanden werden. Als vorteilhafte Ergänzung kann die mindestens eine Reibbremse 16 noch mit einem bezüglich eines relativ geringen Abriebs optimierten (organischen oder metallischen) Reibmaterial ausgebildet sein. Die mindestens eine Bremssystemkomponente 12a und 12b kann z.B. eine Steuereinheit 12a einer elektro-mechanischen Reibbremse 16, eine mit der mindestens einen hydraulischen Reibbremse 16 zusammenwirkende Hydraulikeinrichtung 12a und/oder die Generatorsteuereinrichtung 12b sein.

## Patentansprüche

1. Automatische Bremsvorrichtung für ein Fahrzeug mit:
einer Elektronikeinrichtung (10), welche dazu ausgelegt ist, mindestens eine Bremssystemkomponente (12a, 12b) eines Bremssystems des Fahrzeugs mittels mindestens eines Steuersignals (14a, 14b) derart anzusteuern, dass das Fahrzeug mittels einer von mindestens einer Reibbremse (16) des Fahrzeugs auf mindestens ein zugeordnetes Rad des Fahrzeugs bewirkten Bremskraft abbremsbar ist, wobei zumindest manchmal die mittels der mindestens einen Reibbremse (16) auf das mindestens eine zugeordnete Rad bewirkte Bremskraft um einen vorgegebenen Höchst-Bremskraftaufbaugradienten und/oder auf eine vorgegebene Höchst-Bremskraft gesteigert ist;
**dadurch gekennzeichnet, dass**
die Elektronikeinrichtung (10) zumindest wenn keine Notbremssituation vorliegt vor einem Ausgeben des mindestens einen Steuersignals (14a, 14b) zusätzlich dazu ausgelegt ist, zu ermitteln, ob das Fahrzeug gerade durch ein der Elektronikeinrichtung (10) vorgegebenes Feinstaub-Schutzgebiet fährt, und, gegebenenfalls, die mindestens eine Bremssystemkomponente (12a, 12b) so anzusteuern, dass die mittels der mindestens einen Reibbremse (16) auf das mindestens eine zugeordnete Rad bewirkte Bremskraft höchstens mit einem vorgegebenen oder festgelegten Grenz-Bremskraftaufbaugradienten kleiner als der Höchst-Bremskraftaufbaugradient und/oder höchstens auf eine vorgegebene oder festgelegte Grenz-Bremskraft kleiner als die Höchst-Bremskraft gesteigert ist.

2. Automatische Bremsvorrichtung nach Anspruch 1, wobei die Elektronikeinrichtung (10) zusätzlich dazu ausgelegt ist, unter Berücksichtigung mindestens eines Sensorsignals (18a, 18b) mindestens eines Umgebungserfassungs-Sensors (20a) und/oder mindestens eines Fahrzeugzustanderfassungs-Sensors (20b) festzulegen, ob eine Notbremssituation vorliegt, und, gegebenenfalls selbst wenn das Fahrzeug gerade durch ein der Elektronikeinrichtung (10) vorgegebenes Feinstaub-Schutzgebiet fährt, die mindestens eine Bremssystemkomponente (12a, 12b) so anzusteuern, dass die mittels der mindestens einen Reibbremse (16) auf das mindestens eine zugeordnete Rad bewirkte Bremskraft um den Höchst-Bremskraftaufbaugradienten und/oder auf die Höchst-Bremskraft gesteigert ist.

3. Automatische Bremsvorrichtung nach Anspruch 1 oder 2, wobei, die Elektronikeinrichtung (10) zusätzlich dazu ausgelegt ist, den Grenz-Bremskraftaufbaugradienten und/oder die Grenz-Bremskraft unter Berücksichtigung mindestens einer Temperatur mindestens einer zum Bewirken des automatischen Abbremsens des Fahrzeugs eingesetzten Reibkomponente festzulegen.

4. Automatische Bremsvorrichtung nach einem der vorhergehenden Ansprüche, wobei, sofern das Fahrzeug gerade durch ein der Elektronikeinrichtung (10) vorgegebenes Feinstaub-Schutzgebiet fährt und zumindest wenn keine Notbremssituation vorliegt, die Elektronikeinrichtung (10) zusätzlich dazu ausgelegt ist, zu ermitteln, welche maximale Generator-Bremskraft mittels eines Generators (30) des Fahrzeugs bewirkbar ist, und, zumindest sofern das Fahrzeug innerhalb eines vorgegebenen oder festgelegten Höchst-Zeitintervalls mittels der maximalen Generator-Bremskraft abbremsbar ist, eine Generatorsteuereinrichtung (12b) als die mindestens eine Bremssystemkomponente (12b) derart anzusteuern, dass das Fahrzeug mittels des Generators (30) abgebremst ist.

5. Geschwindigkeitssteuerautomatik für ein Fahrzeug mit einer automatischen Bremsvorrichtung nach einem der vorhergehenden Ansprüche.

6. Verfahren zum automatischen Abbremsen eines Fahrzeugs mit dem Schritt:
Automatisches Abbremsen des Fahrzeugs mittels mindestens einer Reibbremse (16) des Fahrzeugs derart, dass das Fahrzeug mittels einer von der mindestens einen Reibbremse (16) auf mindestens ein zugeordnetes Rad des Fahrzeugs bewirkten Bremskraft abgebremst wird, wobei zumindest manchmal die mittels der mindestens einen Reibbremse (16) auf das mindestens eine zugeordnete Rad bewirkte Bremskraft mit einem vorgegebenen Höchst-Bremskraftaufbaugradienten und/oder bis zu einer vorgegebenen Höchst-Bremskraft gesteigert wird (S7);
**gekennzeichnet durch** die zumindest wenn keine Notbremssituation vorliegt vor dem automatischen Abbremsen ausgeführten Schritte:
Ermitteln, ob das Fahrzeug gerade durch ein vorgegebenes oder selbst-festgelegtes Feinstaub-Schutzgebiet fährt (S1);
wobei, sofern ermittelt wird, das Fahrzeug gerade durch ein Feinstaub-Schutzgebiet fährt, während des automatischen Abbremsens die mittels der mindestens einen Reibbremse (16) auf das mindestens eine zugeordnete Rad bewirkte Bremskraft höchstens mit einem vorgegebenen oder festgelegten Grenz-Bremskraftaufbaugradienten kleiner als der Höchst-Bremskraftaufbaugradient und/oder höchstens bis zu einer vorgegebenen oder festgelegten Grenz-Bremskraft kleiner als die Höchst-Bremskraft gesteigert wird (S2).

7. Verfahren nach Anspruch 6, wobei vor dem automatischen Abbremsen unter Berücksichtigung mindestens eines Sensorsignals (18a, 18b) mindestens eines Umgebungserfassungs-Sensors (20a) und/oder mindestens eines Fahrzeugzustanderfassungs-Sensors (20b) festgelegt wird, ob eine Notbremssituation vorliegt, und bei einer festgelegten Notbremssituation, selbst wenn das Fahrzeug gerade durch ein Feinstaub-Schutzgebiet fährt, die mittels der mindestens einen Reibbremse auf das mindestens eine zugeordnete Rad bewirkte Bremskraft um den Höchst-Bremskraftaufbaugradienten und/oder auf die Höchst-Bremskraft gesteigert wird (S7).

8. Verfahren nach Anspruch 6 oder 7, wobei der Grenz-Bremskraftaufbaugradient und/oder die Grenz-Bremskraft unter Berücksichtigung mindestens einer Temperatur mindestens einer zum Bewirken des automatischen Abbremsens des Fahrzeugs eingesetzten Reibkomponente festgelegt werden.

9. Verfahren nach einem der Ansprüche 6 bis 8, wobei, sofern das Fahrzeug gerade durch ein Feinstaub-Schutzgebiet fährt und zumindest wenn keine Notbremssituation vorliegt, ermittelt wird, welche maximale Generator-Bremskraft mittels eines Generators (30) des Fahrzeugs bewirkbar ist, und, zumindest sofern das automatische Abbremsen des Fahrzeugs innerhalb eines vorgegebenen oder festgelegten Höchst-Zeitintervalls mittels der maximalen Generator-Bremskraft bewirkbar ist, das Fahrzeug mittels des Generators (30) abgebremst wird (S5).

10. Verfahren zum automatischen Steuern einer Geschwindigkeit eines Fahrzeugs mit dem Schritt:
Reduzieren der Geschwindigkeit des Fahrzeugs durch automatisches Abbremsen des Fahrzeugs gemäß dem Verfahren nach einem der Ansprüche 6 bis 9.

## Claims

1. Automatic braking device for a vehicle comprising:
an electronics device (10), which is designed to activate at least one braking system component (12a, 12b) of a braking system of the vehicle by means of at least one control signal (14a, 14b) in such a way that the vehicle can be braked by means of a braking power brought about by at least one friction brake (16) of the vehicle on at least one assigned wheel of the vehicle, wherein at least sometimes the braking power brought about by means of the at least one friction brake (16) on the at least one assigned wheel is increased by a specified maximum braking power buildup gradient and/or up to a specified maximum braking power;
**characterized in that**
at least if there is no emergency braking situation, before outputting the at least one control signal (14a, 14b) the electronics device (10) is additionally designed to determine whether the vehicle at the time is driving through a particulate-matter protection zone specified to the electronics device (10), and, if so, to activate the at least one braking system component (12a, 12b) in such a way that the braking power brought about by means of the at least one friction brake (16) on the at least one assigned wheel is increased at most with a specified or determined limiting braking power buildup gradient less than the maximum braking power buildup gradient and/or at most up to a specified or determined limiting braking power less than the maximum braking power.

2. Automatic braking device according to Claim 1, wherein the electronics device (10) is additionally designed to determine whether there is an emergency braking situation, while taking into account at least one sensor signal (18a, 18b) of at least one environment-detecting sensor (20a) and/or at least one vehicle-state-detecting sensor (20b), and, if so, to activate the at least one braking system component (12a, 12b) in such a way that the braking power brought about by means of the at least one friction brake (16) on the at least one assigned wheel is increased by the maximum braking power buildup gradient and/or up to the maximum braking power even if the vehicle at the time is driving through a particulate-matter protection zone specified to the electronics device (10).

3. Automatic braking device according to Claim 1 or 2, wherein the electronics device (10) is additionally designed to determine the limiting braking power buildup gradient and/or the limiting braking power while taking into account at least one temperature of at least one friction component that is used for bringing about the automatic braking of the vehicle.

4. Automatic braking device according to one of the preceding claims, wherein, if the vehicle at the time is driving through a particulate-matter protection zone specified to the electronics device (10) and at least if there is no emergency braking situation, the electronics device (10) is additionally designed to ascertain which maximum generator braking power can be brought about by means of a generator (30) of the vehicle, and, at least if the vehicle can be braked by means of the maximum generator braking power within a specified or determined maximum time interval, to activate a generator control device (12b) as the at least one braking system component (12b) in such a way that the vehicle is braked by means of the generator (30).

5. Automatic speed control system for a vehicle comprising an automatic braking device according to one of the preceding claims.

6. Method for automatically braking a vehicle comprising the step of:
automatically braking the vehicle by means of at least one friction brake (16) of the vehicle in such a way that the vehicle is braked by means of a braking power brought about by the at least one friction brake (16) on at least one assigned wheel of the vehicle, wherein at least sometimes the braking power brought about by means of the at least one friction brake (16) on the at least one assigned wheel is increased with a specified maximum braking power buildup gradient and/or up to a specified maximum braking power (S7);
**characterized by** the steps that are performed before the automatic braking, at least if there is no emergency braking situation:
ascertaining whether the vehicle at the time is driving through a specified or self-determined particulate-matter protection zone (S1);
wherein, if it is ascertained that the vehicle at the time is driving through a particulate-matter protection zone, during the automatic braking the braking power brought about by means of the at least one friction brake (16) on the at least one assigned wheel is increased at most with a specified or determined limiting braking power buildup gradient less than the maximum braking power buildup gradient and/or at most up to a specified or determined limiting braking power less than the maximum braking power (S2).

7. Method according to Claim 6, wherein, before the automatic braking, it is determined whether there is an emergency braking situation, while taking into account at least one sensor signal (18a, 18b) of at least one environment-detecting sensor (20a) and/or at least one vehicle-state-detecting sensor (20b), and, if an emergency braking situation is determined, the braking power brought about by means of the at least one friction brake on the at least one assigned wheel is increased by the maximum braking power buildup gradient and/or up to the maximum braking power even if the vehicle at the time is driving through a particulate-matter protection zone (S7) .

8. Method according to Claim 6 or 7, wherein the limiting braking power buildup gradient and/or the limiting braking power are determined while taking into account at least one temperature of at least one friction component that is used for bringing about the automatic braking of the vehicle.

9. Method according to one of Claims 6 to 8, wherein, if the vehicle at the time is driving through a particulate-matter protection zone and at least if there is no emergency braking situation, it is ascertained which maximum generator braking power can be brought about by means of a generator (30) of the vehicle, and, at least if the automatic braking of the vehicle can be brought about by means of the maximum generator braking power within a specified or determined maximum time interval, the vehicle is braked by means of the generator (30) (S5).

10. Method for automatically controlling a speed of a vehicle comprising the step of:
reducing the speed of the vehicle by automatically braking the vehicle by the method according to one of Claims 6 to 9.

## Revendications

1. Dispositif de freinage automatique pour un véhicule, comprenant :
un dispositif électronique (10) qui est conçu pour piloter au moins un composant de système de freinage (12a, 12b) d'un système de freinage du véhicule au moyen d'au moins un signal de commande (14a, 14b) de telle sorte que le véhicule peut être freiné au moyen d'une force de freinage exercée par au moins un frein à friction (16) du véhicule sur au moins une roue associée du véhicule, dans lequel au moins parfois, la force de freinage exercée par ledit au moins un frein à friction (16) sur ladite au moins une roue associée est augmentée d'un gradient d'établissement de force de freinage maximale prédéfini et/ou jusqu'à une force de freinage maximale prédéfinie ;
**caractérisé en ce qu'**au moins s'il n'existe pas de situation de freinage d'urgence, avant une sortie dudit au moins un signal de commande (14a, 14b), le dispositif électronique (10) est en outre conçu pour déterminer si le véhicule est en train de passer par une zone protégée des particules fines prédéfinie au niveau du dispositif électronique (10), et le cas échéant, pour piloter ledit au moins un composant de système de freinage (12a, 12b) de telle sorte que la force de freinage exercée par ledit au moins un frein à friction (16) sur ladite au moins une roue associée est augmentée au plus d'un gradient d'établissement de force de freinage limite spécifié, inférieur au gradient d'établissement de force de freinage maximale, et/ou au plus jusqu'à une force de freinage prédéfinie ou spécifiée, inférieure à la force de freinage maximale.

2. Dispositif de freinage automatique selon la revendication 1, dans lequel le dispositif électronique (10) est en outre conçu, en tenant compte d'au moins un signal de capteur (18a, 18b) d'au moins un capteur de détection d'environnement (20a) et/ou d'au moins un capteur de détection d'état de véhicule (20b), pour spécifier s'il existe une situation de freinage d'urgence, et le cas échéant, même si le véhicule est en train de passer par une zone protégée des particules fines prédéfinie au niveau du dispositif électronique (10), pour piloter ledit au moins un composant de système de freinage (12a, 12b) de telle sorte que la force de freinage exercée par ledit au moins un frein à friction (16) sur ladite au moins une roue associée est augmentée du gradient d'établissement de force de freinage maximale et/ou jusqu'à la force de freinage maximale.

3. Dispositif de freinage automatique selon la revendication 1 ou 2, dans lequel le dispositif électronique (10) est en outre conçu pour spécifier le gradient d'établissement de force de freinage limite et/ou la force de freinage limite en tenant compte au moins d'une température d'au moins un composant de friction mis en œuvre pour exercer le freinage automatique du véhicule.

4. Dispositif de freinage automatique selon l'une quelconque des revendications précédentes, dans lequel, dans la mesure où le véhicule est en train de passer par une zone protégée des particules fines prédéfinie au niveau du dispositif électronique (10), et si au moins il n'existe pas de situation de freinage d'urgence, le dispositif électronique (10) est en outre conçu pour déterminer quelle force de freinage de générateur maximale peut être exercée au moyen d'un générateur (30) du véhicule, et au moins dans la mesure où le véhicule peut être freiné dans un intervalle de temps maximal prédéfini ou spécifié au moyen de la force de freinage de générateur maximale, pour piloter un dispositif de commande de générateur (12b) comme ledit au moins un composant de système de freinage (12b) de telle sorte que le véhicule est freiné au moyen du générateur (30).

5. Système automatique de commande de vitesse pour un véhicule comprenant un dispositif de freinage automatique selon l'une quelconque des revendications précédentes.

6. Procédé de freinage automatique d'un véhicule, comprenant l'étape consistant à :
freiner automatiquement le véhicule au moyen d'au moins un frein à friction (16) du véhicule de telle sorte que le véhicule est freiné au moyen d'une force de freinage exercée par ledit au moins un frein à friction (16) sur au moins une roue associée du véhicule, dans lequel au moins parfois la force de freinage exercée au moyen dudit au moins un frein à friction (16) sur ladite au moins une roue associée est augmentée (S7) d'un gradient d'établissement de force de freinage maximale prédéfini et/ou jusqu'à une force de freinage maximale prédéfinie ;
caractérisé, au moins s'il n'existe pas de situation de freinage d'urgence, par les étapes effectuées avant le freinage automatique, consistant à :
déterminer si le véhicule est en train de passer (S1) par une zone protégée des particules fines prédéfinie ou spécifiée par ses propres moyens ;
dans lequel, dans la mesure où il est déterminé que le véhicule est en train de passer par une zone protégée des particules fines, pendant le freinage automatique, la force de freinage exercée au moyen dudit au moins un frein à friction (16) sur ladite au moins une roue associée est augmentée (S2) au plus d'un gradient d'établissement de force de freinage limite prédéfini ou spécifié, inférieur au gradient d'établissement de force de freinage maximale, et/ou au plus jusqu'à une force de freinage limite prédéfinie ou spécifiée, inférieure à la force de freinage maximale.

7. Procédé selon la revendication 6, dans lequel, avant le freinage automatique en tenant compte d'au moins un signal de capteur (18a, 18b) d'au moins un capteur de détection d'environnement (20a) et/ou d'au moins un capteur de détection d'état de véhicule (20b), il est spécifié s'il existe une situation de freinage d'urgence, et dans le cas d'une situation de freinage d'urgence spécifiée, même si le véhicule est en train de passer par une zone protégée des particules fines, la force de freinage exercée au moyen dudit au moins un frein à friction sur ladite au moins une roue associée est augmentée (S7) du gradient d'établissement de force de freinage maximale et/ou jusqu'à la force de freinage maximale.

8. Procédé selon la revendication 6 ou 7, dans lequel le gradient d'établissement de force de freinage limite et/ou la force de freinage limite sont définis en tenant compte au moins d'une température d'au moins un composant de friction mis en œuvre pour exercer le freinage automatique du véhicule.

9. Procédé selon l'une quelconque des revendications 6 à 8, dans lequel, dans la mesure où le véhicule est en train de passer par une zone protégée des particules fines, et au moins s'il n'existe pas de situation de freinage d'urgence, il est déterminé quelle force de freinage de générateur maximale peut être exercée au moyen d'un générateur (30) du véhicule, et au moins dans la mesure où le freinage automatique du véhicule peut être exercé dans un intervalle de temps maximal prédéfini ou spécifié au moyen de la force de freinage de générateur maximale, le véhicule est freiné (S5) au moyen du générateur (30).

10. Procédé de commande automatique d'une vitesse d'un véhicule, comprenant l'étape consistant à :
réduire la vitesse du véhicule par un freinage automatique du véhicule selon le procédé selon l'une quelconque des revendications 6 à 9.
